# EUROPÄISCHE PATENTSCHRIFT

(11) **EP 1 544 531 B1**
(45) Veröffentlichungstag und Bekanntmachung des Hinweises auf die Patenterteilung: **06.09.2006**
(21) Anmeldenummer: 04028777.3
(22) Anmeldetag: 04.12.2004
(51) Int. Cl.: F16L 37/14

(54) **Lösbare Verbindung für Rohre**
Releasable tube coupling
Raccord de tuyaux détachable

(30) Priorität: 20.12.2003 DE 20319819 U
(43) Veröffentlichungstag der Anmeldung: 22.06.2005
(73) Patentinhaber: FISIA Babcock Environment GmbH, 51642 Gummersbach (DE)
(72) Erfinder: Schadow, Uwe, 51643 Gummersbach (DE)
(74) Vertreter: Lüdtke, Frank

(56) Entgegenhaltungen:
- EP-A- 1 024 324
- EP-A- 1 209 406
- FR-A- 2 142 147
- US-A- 4 682 472
- US-A- 4 768 587
- US-A- 5 513 882
- US-A- 6 042 154

## Beschreibung

Die Erfindung betrifft eine lösbare Verbindung für Rohre entsprechend dem Oberbegriff des ersten Anspruches.
Die lösbare Verbindung ist insbesondere einsetzbar für Suspensionsdüsen und Anbauten an Suspensionsverteilerrohren in Rauchgaswäschern sowie für Rohre die äußerlich mit aggressiven Medien in Kontakt kommen und in denen aggressive Medien transportiert werden. Für derartige Rohrverbindungen sind nach dem Stand der Technik Flansch-, Schraub- oder Schellenverbindungen bekannt. Bei dem Einsatz von Düsen ist die technische Funktion üblicherweise von der Sprührichtung in besonderem Maße abhängig. Bei den Schraub- und Schellenverbindungen ist in der Regel die dafür erforderliche
Verdrehsicherheit nicht gewährleistet. Weiterhin sind die Verbindungen durch die aggressiven Medien einem hohen Verschleiß ausgesetzt, was dazu führt, daß diese häufig erneuert werden müssen. Um das zu vermeiden, werden hoch korrosionsbeständige Verbindungselemente auf der Basis einer Chrom-Nickel-Legierung eingesetzt, die sehr teuer sind. Erschwerend kommt hinzu, daß die zu verbindenden Bauteile aus unterschiedlichen Materialien bestehen können, üblich sind z. B. Kunststoff, Keramik oder metallische Sondermaterialien.

Aus der gattungsbildenden *WO 96 10 712 A1* ist eine Verbindung zwischen Rohren bekannt, wobei die eine Seite ein glockenförmiges Anschlußteil aufweist, welches mit einem anderen Rohr dadurch verbunden wird, daß ein U-förmiges Teil in Öffnungen im Umfang des ersten Teiles eingeschoben wird und auf diese Weise das zweite Teil im glockenförmigen Umfang des ersten Teiles hält. Nachteilig an dieser Lösung ist, daß beide Teile gegeneinander verdrehbar sind, also keine Fixierung zwischen beiden Teilen vorhanden ist. Dadurch können sich beide Teile zueinander bewegen, was Beschädigungen oder Undichtheiten zur Folge haben kann. Insbesondere für aggressive Medien sind daher diese Verbindungen ungeeignet.

Aus *FR 2.142.147* ist eine Rohrverbindung bekannt, bei der zwei Rohre durch Bolzen miteinander verbunden sind. Allerdings weist auch diese Verbindung den Nachteil auf, daß der Drehwinkel nicht fixiert ist und durch ein Verdrehen der Rohre zueinander Undichtheiten entstehen können. Eine eindeutige Positionierung der Rohre zueinander im Hinblick auf ihren Drehwinkel ist nach dieser Lösung nicht möglich.

Es ist daher Aufgabe der Erfindung, eine lösbare Verbindung zwischen Rohren bzw. Anschlussteilen, wie z. B. Düsen zu schaffen, in denen aggressive Medien transportiert und die von aggressiven Medien umströmt werden, die schnell, sicher, kostengünstig und verdrehsicher ist.
Diese Aufgabe wird durch eine lösbare Verbindung nach den Merkmalen des ersten Anspruches gelöst. Unteransprüche geben vorteilhafte Ausgestaltungen der Erfindung wieder.

Ausgehend von bekannten Rohrverbindungen wie sie in WO 96/10712 A1 oder FR 2142147 beschrieben sind, sieht die vorgeschlagene Lösung vor, daß eine Anschlußseite ein ringförmig begrenzendes Teil darstellt, welches glockenförmig sein kann und eine ebene Fläche darstellt. Die ebene Fläche dient dazu, mit dem zweiten Anschlußteil eine dichte Verbindung herzustellen. Das begrenzende ringförmige oder glockenförmige Teil dient dazu, den modifizierten Bund der Gegenseite so aufzunehmen, daß eine formschlüssige Verbindung vorhanden ist. Wichtig für die Funktion der lösbaren Verbindung ist, daß das ringförmig begrenzende oder glockenförmige Teil oben und unten eine Bohrung für einen Bolzen aufweist. Im Unterschied zu den bekannten Rohrverbindungen weist die zweite Anschlußseite des fortführenden Teiles auf der Seite, die der ebenen Fläche gegenüberliegt, oben und unten Halteflächen auf, die mit einer Ausnehmung für einen Bolzen versehen sind, wobei die Ausnehmung parallel zu der Bohrung angeordnet ist, die im ringförmig begrenzenden Teil für den Bolzen vorgesehen ist. Als Halteflächen sind ebene Flächen in einem Winkel α zwischen 10 und 60° zur ebenen oder Planfläche, insbesondere von 30° bis 45° vorgesehen. Die Halteflächen können weiterhin zur Stabilisierung der Verbindung eine Nut aufweisen.

Die beiden Rohrseiten müssen so ineinander gesteckt werden, daß die beiden ebenen Flächen aufeinanderliegen, wobei die zweite Anschlußseite mit ihren Halteflächen so verdreht wird, daß die Halteflächen sich an der Stelle befinden, an der im ringförmig begrenzenden Teil Bohrungen für die Bolzen aufweist. Zwischen beiden sich berührenden Anschlußseiten ist ein Dichtungselement angeordnet, welches beide Teile gegeneinander abdichtet und dafür sorgt, daß eine notwendige Pressung zwischen beiden Teilen entsteht ist. Die Rückstellkräfte des Dichtmaterials bewirken die Sicherung des Bolzens in der Bohrung des ringförmig begrenzenden Teiles oder der Glockenmuffe.

Vorteilhaft ist es, als Dichtungselement einen O-Ring zu verwenden. Weiterhin ist es vorteilhaft, den O-Ring in eine Nut der ersten Anschlußseite einzulegen. Dadurch wird die Montage beider Teile aneinander erheblich erleichtert. Sobald beide Teile mit ihren ebenen Flächen aneinanderliegen, werden die beiden Bolzen durch die oberen und unteren Bohrungen des ringförmig begrenzenden Teiles geschoben, so daß beide Rohre einfach und sicher miteinander verbunden sind, wobei durch die oben und unten angeordnete Ausnehmung im Zusammenwirken mit dem Bolzen eine Verdrehsicherheit der Rohre gegeneinander gewährleistet ist.

Vorteilhaft ist es, daß der Bolzen zumindest auf einer Seite ein konisches Ende aufweist. Weiterhin ist die Verbindung vorteilhaft, wenn die erste Anschlußseite aus einem keramischen Material besteht und die zweite Anschlußseite aus einem anderen Werkstoff besteht z. B. Kunststoff und somit eine Verbindung durch Thermisches Fügen nicht möglich ist. Der O-Ring kann aus Gummi bestehen. Die Bolzen können aus Stahl, Edelstahl oder einem anderen biegesteifen Material bestehen.

Im Folgenden wird die Erfindung an einem Ausführungsbeispiel mit neun Figuren näher erläutert. Die Figuren zeigen:
- *Figur 1:*: Rohrverbindung zu einem keramischen Anbauteil im Halbschnitt.
- *Figur 2:*: Ansicht A von Figur 1.
- *Figur 3:*: Stiftbolzen.
- *Figur 4:*: Rohr mit modifiziertem Bund (Anschlußseite 2).
- *Figur 5:*: Ansicht B auf Figur 4.
- *Figur 6:*: O-Ring.
- *Figur 7:*: Ansicht C von Figur 8.
- *Figur 8:*: Halbschnitt durch die erste Anschlußseite mit dem ringförmig begrenzenden Verbindungsteil oder der Glockenmuffe.
- *Figur 9:*: Rohr mit Nut auf der Haltefläche.

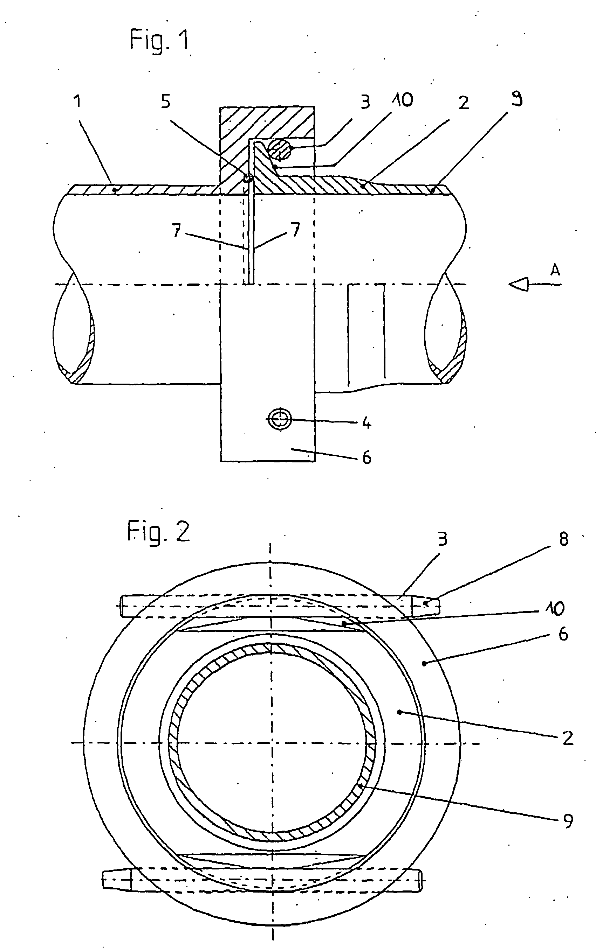

Die *Figur 1* zeigt zwei Rohre 1, 2 im Halbschnitt, wobei die erste Anschlußseite 1 ein ringförmig begrenzendes Teil 6 oder eine Glockenmuffe aufweist, in der oben und unten Bohrungen 4 angeordnet sind, durch die Bolzen 3 ragen, die eine zweite Anschlußseite 2 lösbar mit der ersten Anschlußseite 1 verbinden, wobei die zweite Anschlußseite 2 einen weiteren Außendurchmesser aufweist. Beide Anschlußseiten 1, 2 weisen ebene Flächen 7 auf, die aneinander liegen, wobei ein O-Ring 5 beide Teile 1, 2 gegeneinander abdichtet. Den erforderlichen Anpreßdruck für die Abdichtung wird über die Bolzen 3 realisiert.

Die *Figur 2* zeigt die Ansicht A von Figur 1, aus der erkennbar ist, daß oben und unten Bolzen 3 im ringförmig begrenzenden Teil 6 angeordnet sind, wobei die Bolzen 3 auf einer Seite ein konisches Ende 8 aufweisen, um die Montage zu erleichtern.

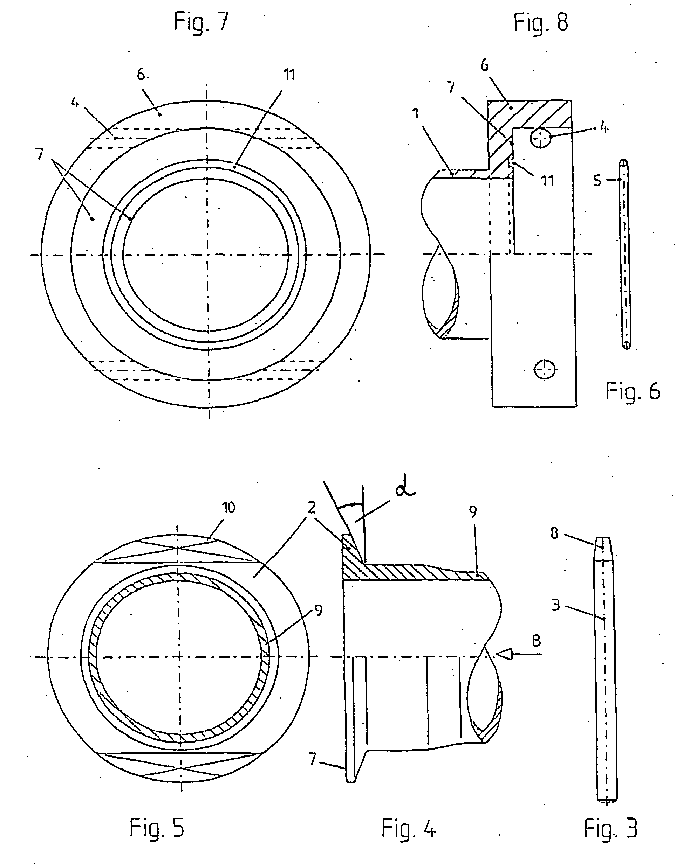

Die *Figuren 4 und 5* zeigen die zweite Anschlußseite 2 für das Anschlußteil 9 in verschiedenen Ansichten. Der an sich zylindrische Bund weist zwei Halteflächen 10 auf, die um den Winkel α = 30° gegen die Planfläche 7 geneigt sind. Das anschließende Teil 9 (zweite Anschlußseite) besteht aus dem Werkstoff, der sich im Vergleich zur ersten Anschlußseite leichter herstellen läßt.

Die *Figur 3* zeigt den Bolzen 3 mit seinem konischen Ende 8.

Die *Figur 6* zeigt den O-Ring 5 in Seitenansicht.

Die *Figuren 7 und 8* zeigen die erste Anschlußseite mit ihrem ringförmigen oder glockenförmigen Teil 6, durch das oben und unten die Bohrung 4 eingebracht ist, wobei in der ebenen Fläche 7 die Nut 11 für den O-Ring 5 eingebracht wurde. Die Anschlußseite 1 mit der Glockenmuffe besteht aus einem Material, welches für aggressive und hoch korrosive Medien besonders geeignet ist. Der Bolzen 3 sollte aus biegesteifem hoch korrosionsbeständigem Material bestehen.

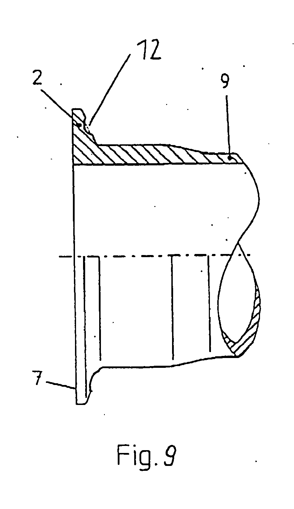

Die *Figur 9* zeigt eine Ausführungsvariante, bei der die Haltefläche 10 mit einer Nut 12 zur besseren Stabilisierung ausgeführt ist.

Die vorgeschlagene Lösung hat den Vorteil, daß eine lösbare Verbindung für Rohre, die aus unterschiedlichem Material bestehen können, die äußerlich von aggressiven Medien umströmt und in denen aggressive Medien transportiert werden, auf schnelle und einfache Weise kostengünstig herstellbar ist und mit geringem Aufwand in der vorgegebenen Position montierbar ist.

### Liste der verwendeten Bezugszeichen

- 1.: Erste Anschlußseite
- 2.: Zweite Anschlußseite
- 3.: Bolzen
- 4.: Bohrung in 6
- 5.: O-Ring
- 6.: Ringförmig begrenzendes Teil, Glockenmuffe
- 7.: Ebene Fläche an der Stirnseite von 1 oder 2
- 8.: Konisches Ende des Bolzens
- 9.: Anschlussteil (leicht zu bearbeitender Werkstoff)
- 10.: Haltefläche im Winkel α zu 7
- 11.: Nut in 7
- 12.: Nut der Haltefläche 10

## Patentansprüche

1. Lösbare Verbindung für Rohre, die äußerlich mit aggressiven Medien in Kontakt kommen und in denen aggressive Medien transportiert werden, insbesondere für Anbauten für Suspensionsverteilerrohren innerhalb von Rauchgaswäschern, wobei
- eine erste Anschlußseite (1) an ihrer Außenseite ein ringförmig begrenzendes Teil (6) um eine ebene Fläche (7) aufweist, wobei das ringförmig begrenzende Teil (6) mit Bohrungen (4) für Bolzen (3) versehen ist,
- eine zweite Anschlußseite (2) eines anschließenden Equipements oder rohrfortführenden Rohrs (9) eine weitere ebene Fläche (7) aufweist, der ebene Halteflächen (10) für die Bolzen gegenüberliegen, wobei die Halteflächen (10) parallel zu den Bohrungen (4) angeordnet sind,
- ein Dichtungselement (5) zwischen den ebenen Flächen (7) der beiden Anschlußseiten (1, 2) angeordnet ist,
- die Bolzen (3) zum Verbinden und Sichern beider Anschlußseiten (1, 2) vorgesehen sind,
- die Bolzen (3) in den Bohrungen (4) geführt werden und sich auf den Halteflächen (10) abstützen, **dadurch gekennzeichnet, daß** die Halteflächen (10) als Verdrehsicherung ausgeführt und gegen die ebene Fläche (7) der zweiten Anschlußseite (2) in einem Winkel α zwischen 20° und 60° geneigt sind.

2. Lösbare Verbindung nach Anspruch 1, **dadurch gekennzeichnet, daß** die Halteflächen (10) in einem Winkel α zwischen 30° und 45° gegen die Fläche (7) geneigt sind.

3. Lösbare Verbindung nach Anspruch 1, **dadurch gekennzeichnet, daß** die Halteflächen (10) mindestens eine Nut (12) aufweisen.

4. Lösbare Verbindung nach Anspruch 1, **dadurch gekennzeichnet, daß** das Dichtungselement einen O-Ring (5) darstellt.

5. Lösbare Verbindung nach Anspruch 4, **dadurch gekennzeichnet, daß** die erste Anschlußseite (1) eine Nut (11) für den O-Ring (5) aufweist.

6. Lösbare Verbindung nach den Ansprüchen 1 bis 5, **dadurch gekennzeichnet, daß** die Bolzen (3) mindestens ein konisches Ende (8) aufweisen.

7. Lösbare Verbindung nach den Ansprüchen 1 bis 6, **dadurch gekennzeichnet, daß** die erste Anschlußseite (1) aus einem bestimmten Material wie z. B Kunststoff und die zweite Anschlußseite (2) aus einem anderen, wie z. B. Keramik besteht, die sich mit thermischen Fügeverfahren nicht verbinden lassen.

8. Lösbare Verbindung nach Anspruch 4, **dadurch gekennzeichnet, daß** der O-Ring (5) aus Gummi besteht.

## Claims

1. A releasable connection for pipes coming into external contact with aggressive fluids and carrying aggressive fluids, more specifically for extensions for suspension distributing pipes inside flue gas washers, wherein
- a first connection side (1) has on its outer side an annular limiting part (6) about a level surface (7), said annular limiting part (6) being provided with holes (4) for bolts (3),
- a second connection side (2) of an adjoined equipment or of a pipe (9) extending as a pipe continuation has another level surface (7) opposite which there are located level retaining surfaces (10) for the bolts, said retaining surfaces (10) being disposed parallel to the holes (4),
- a sealing element (5) being disposed between the level surfaces (7) of the two connecting sides (1, 2),
- the bolts (3) are provided for connecting and securing the two connecting sides (1, 2),
- the bolts (3) are guided in the holes (4) and abut the retaining surfaces (10),
**characterized in that** the retaining surfaces (10) are implemented as rotation-preventing securement and are inclined at an angle α ranging between 20° and 60° with respect to the level surface (7) of the second connecting side (2).

2. The releasable connection as set forth in claim 1, **characterized in that** the retaining surfaces (10) are inclined at an angle α ranging between 30° and 45° with respect to the surface (7).

3. The releasable connection as set forth in claim 1, **characterized in that** the retaining surfaces (10) have at least one groove (12).

4. The releasable connection as set forth in claim 1, **characterized in that** the sealing element constitutes an O-ring (5).

5. The releasable connection as set forth in claim 4, **characterized in that** the first connection side (1) has a groove (11) for the O-ring (5).

6. The releasable connection as set forth in the claims 1 through 5, **characterized in that** the bolts (3) have at least one conical end (8).

7. The releasable connection as set forth in the claims 1 through 6, **characterized in that** the first connection side (1) is made from a certain material such as plastics and the second connection side (2), from another such as ceramics, which cannot be bonded together by thermal bonding methods.

8. The releasable connection as set forth in claim 4, **characterized in that** the O-ring (5) is made from rubber.

## Revendications

1. Raccord amovible pour tuyaux véhiculant des fluides agressifs et venant extérieurement en contact avec des fluides agressifs, notamment pour des prolongements de tuyaux distributeurs de suspension à l'intérieur de laveurs de fumées, où
- un premier côté de raccordement (1) comporte sur sa face extérieure une partie (6) de délimitation annulaire autour d'une surface plane (7), la partie de délimitation annulaire (6) étant pourvue de trous (4) pour des boulons (3),
- un deuxième côté de raccordement (2) d'un équipement attenant ou d'un tuyau de prolongement (9) du tuyau comporte une surface plane supplémentaire (7) en face de laquelle se trouvent situées des surfaces de retenue planes (10) pour les boulons, les surfaces de retenue (10) étant disposées parallèlement aux trous (4),
- un élément d'étanchéité (5) est interposé entre les surfaces planes (7) des deux côtés de raccordement (1, 2),
- les boulons (3) sont prévus pour relier et arrêter les deux côtés de raccordement (1,2),
- les boulons (3) sont guidés dans les trous (4) et sont en appui sur les surfaces de retenue (10),
**caractérisé en ce que** les surfaces de retenue (10) sont réalisées sous forme d'élément de fixation destiné à prévenir un mouvement relatif de rotation et sont inclinées par rapport à la surface (7) du deuxième côté de raccordement (2) de manière à former avec celle-ci un angle α compris entre 20° et 60°.

2. Raccord amovible selon la revendication 1, **caractérisé en ce que** les surfaces de retenue (10) sont inclinées par rapport à la surface (7) de manière à former avec celle-ci un angle α compris entre 30° et 45°.

3. Raccord amovible selon la revendication 1, **caractérisé en ce que** les surfaces de retenue (10) comportent au moins une rainure (12).

4. Raccord amovible selon la revendication 1, **caractérisé en ce que** l'élément d'étanchéité constitue un joint torique (5).

5. Raccord amovible selon la revendication 4, **caractérisé en ce que** le premier côté de raccordement (1) comporte une rainure (11) pour le joint torique (5).

6. Raccord amovible selon l'une quelconque des revendications 1 à 5, **caractérisé en ce que** les boulons (3) comportent au moins une extrémité conique (8).

7. Raccord amovible selon l'une quelconque des revendications 1 à 6, **caractérisé en ce que** le premier côté de raccordement (1) est réalisé en un certain matériau, une matière plastique par exemple, et le deuxième côté de raccordement (2) en un autre matériau, une matière céramique par exemple, qui ne peuvent pas être reliés par un procédé d'assemblage thermique.

8. Raccord amovible selon la revendication 4, **caractérisé en ce que** le joint torique (5) est réalisé en caoutchouc.
